(19) Europäisches Patentamt
European Patent Office
Office européen des brevets

(11) **EP 2 163 514 A1**

(12) **EUROPÄISCHE PATENTANMELDUNG**

(43) Veröffentlichungstag:
**17.03.2010 Patentblatt 2010/11**

(51) Int Cl.:
***C01B 3/04*** (2006.01)     ***C25B 1/04*** (2006.01)

(21) Anmeldenummer: **08405222.4**

(22) Anmeldetag: **11.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **E&Sa Project AG**
**6340 Baar (CH)**

(72) Erfinder:
- **Sass, Wolfgang**
  **5210 Windisch (CH)**
- **Epishin, Anatoly**
  **127083 Moskau (RU)**

(54) **Technologie zur Herstellung von Treibstoffgas und Elektroenergie aus Wasser**

(57)     Das hier beschriebene Verfahren zur Erzeugung von Treibstoffgas und Elektroenergie aus Wasser bzw. Wasserdampf, ist ein Verfahren zur Separierung von Wasserstoffionen und Elektronen.

In einer Anlage wird zugeführtes Wasser durch das Wirken elektrischer und elektromagnetischer Felder Wasserstoffionen und Elektronen separiert.
Als ein weiteres Produkt fällt Sauerstoff an.

Abbildung 1: Skizze des Wirkungsprinzips der Apparatur

**Beschreibung**

Die Technologie zur Erzeugung von Treibstoffgas und Elektroenergie aus Wasser bzw. Wasserdampf, ist ein Verfahren zur Separierung von Wasserstoffionen und Elektronen.

In einer Anlage wird zugeführtes Wasser durch das Wirken elektrischer und elektromagnetischer Felder Wasserstoffionen und Elektronen separiert.

Das wichtigste Element der Anlage ist der Separator (Abscheider).

Aufgrund der besonderen Geometrie arbeiten im Abscheider zwei transversale Felder: ein elektrisches Hochspannungsfeld und ein elektromagnetisches Feld (Bild 1).

Die zu separierenden Flüssigkeiten bzw. Gase werden durch diese Felder gepumpt.

Wasser- oder Gasmoleküle, die in ihrem freien Zustand klar ausgeprägte Dipole (1,87 Debye) darstellen, befinden sich in einer chaotischen Brownschen Bewegung.

Wenn sie auf ein elektrisches Feld mit einer ausreichenden Spannung treffen, werden die Moleküle polarisiert, reihen sich entlang der Achse der angelegten Spannung auf und trennen sich teilweise.

Wird nun diese Masse polarisierten Wassers in das transversale Magnetfeld gegeben und bewegt, so entsteht folgende interessante Situation: die Elektronen in einer Valenzbindung, die Wasserstoffprotonen, d.h. alle aufgeladenen Teilchen, werden, wenn sie sich im Magnetfeld bewegen, gemäß des Lorentzschen Gesetzes ihre Bahnen ändern, und das um so stärker, je höher die Flussgeschwindigkeit ist.

Diejenigen Elektronen, die durch die Felder an die Anode gedrückt werden, werden durch einen Hochspannungsgleichrichter "abgesaugt" und auf eine isolierte Katode übertragen.

Aufgrund der Isolierung der Katode kehren sie nicht in den Fluss zurück, d.h. im Unterschied zur Elektrolyse erfolgt hier keine Rekombination! Dieser Umstand ist von großer Bedeutung für die Senkung des Energieverbrauches.

Das überschüssige Elektronenpotential, das sich während der Abscheidung in der Katode ansammelt, wird in serienmäßig hergestellten Generatoren beliebige Aggregate mit Energie versorgen - dadurch erhalten wir Wärme und Strom in einem Prozess.

Im Strom bilden sich lawinenartig Sauerstoff- und Wasserstoffionen. Die Gaskomponente des Stroms steigt immer mehr an und erreicht bei entsprechender Größe des Magnetspaltes (Bild 2) ihr Maximum - d.h., sie geht in Treibstoffgas über.

Besonderheiten des Verfahrens:

1. Betriebene Anlage sind ökologisch sicher.

2. Das Verfahren ermöglicht eine fast unbegrenzte Erneuerung der Ressourcen.
(z.B. das Meerwasser: durch die Abscheidung von Schwefelwasserstoff aus dem Meer, die Reinigung von Trinkwasser, die Nutzung von Dampf aus Wärmekraftwerken)

3. Viele Ressourcen für die Nutzung des Verfahrens sind aus nationaler Herstellung verfügbar.

4. Die Selbstkosten für die Herstellung von 1 $m^3$ Treibstoffgas sind annähernd 3 mal geringer als bei 1 $m^3$ Erdgas

5. Bei Einsatz unseres Verfahrens könnte der gesamte Energiesektor umstrukturiert werden, da die Notwendigkeit entfällt, zentral Wärme zu erzeugen und über Fernleitungen an den Verbraucher zu transportieren. Die gesamte Wärme wird dort erzeugt, wo sie benötigt wird, ohne An- und Abtransport von Treibstoff.

6. Bei der Verbrennung des Treibstoffgases bilden sich keine Kohlenstoffmonoxide, da die Abfälle/Rückstände bei Betrieb einer Anlage sich auf eine geringe Menge Wasser (Kondensat) reduzieren.

7. Der Einsatz dieses Verfahrens gewährleistet eine hohe Betriebssicherheit - fällt Wasser oder Strom aus, so wird der Prozess sofort unterbrochen. Gasleckage ist ausgeschlossen, da die Gasverbrennung direkt im Zuge der Erzeugung erfolgt.

Mögliche Anwendungsgebiete und potenzielle Nutzer:

Wohnungssektor - Versorgung von Wohnhäusern und Industriegebäuden (Typenbauten )mit Wärme und Heißwasser, unabhängig von der Anzahl der Stockwerke; Möglichkeiten zum Einsatz unserer Anlagen in Heizhäusern oder Wärmekraftwerken ohne erforderliche große Umgestaltungen. Erdgas könnte als Reserve dienen.

Heizkraftwerke - Nutzung des "Abdampfes" als Treibstoff für Kraftwerke. Der Wirkungsgrad der Kraftwerke kann dadurch auf 90 % und eventuell höher gesteigert werden. Das bedeutet ökologisch saubere Abgase und große Mengen billiger Elektroenergie ohne wesentliche finanzielle Investitionen.

KFZ-Wesen - eine Weiterentwicklung des Generators ermöglicht eine Nutzung zur Erzeugung von umweltfreundlichem Kraftstoff für jegliche Transportmittel (dabei wäre es nicht erforderlich, im Fahrzeug Wasserstoff- und Sauerstoffflaschen mitzuführen).

Schiffbau - die Herstellung von Schiffsantrieben mit Wasserstofftechnologie unter Nutzung von Außenbordwasser.

Flugzeugbau - Triebwerke mit Wasserstofftechnologie ohne jegliche schädliche Abgase.

Die Ökologie des Schwarzen Meeres bietet unerschöpfliche Reserven von tiefliegendem Schwefelwasserstoff $H_2S$, dessen Formel strukturell sehr ähnlich zu $H_2O$ ist. Dadurch ist es möglich, Wasserstoff und Kolloidschwefel zu erhalten. Wasserstoff wird verflüssigt, Schwefel könnte zur Herstellung verschiedenster chemischer Verbindungen genutzt werden (Säuren, Chemikalien für die Landwirtschaft, die Pharmazeutik etc.) So erfolgt neben der Gewinnung eines wichtigen Rohstoffes noch die Säuberung des Meerwassers von Schwefelwasserstoff.

**Patentansprüche**

1. Der Patenttanspruch-1 umfasst das Verfahren zur Separierung von Wasserstoffionen und Elektronen aus Wasser und Wasserdampf.

   Das Verfahren zur Separierung von Wasserstoffionen und Elektronen ist eine Abscheidung von Elektronen von den äüßeren Bahnen von Wassermolekülen.

   Die Bestandteile von Wasser, Wasserstoff und Sauerstoff, die an sich Gase darstellen, werden bei Verbindung in einem Molekül zu Flüssigkeit. Entfernt man von der äüßeren Bahn der Elektronenpaarbindung des Wassermoleküls zumindest zwei Elektronen, so verwandeln sich die Bestandteile Wasser und Sauerstoff in positive Ionen.

   Durch die Abstoßung aufgrund der Coulombschen Kraft werden sie zu Gasen - also zu Treibstoff!

   Der atomare Wasserstoff brennt mit einer Temperatur von 4000 ˚C, der molekulare - von 2500 ˚C. Sauerstoff verstärkt den Brennvorgang.

   Wie erfolgt die Ablösung der Elektronen von den Bahnen der Wassermoleküle? In der Anlage kommen durch die besondere Geometrie drei bestimmende Faktoren zur Geltung: die Geschwindigkeit des Flüssigkeitsflusses, ein transversales Magnetfeld und ein elektrisches Hochspannungsfeld, (Bild-1):

   1. Flussrichtung der Flüssigkeit
   2. Anode im elektrischen Hochspannungsfeld
   3. Magnetfeld.

   Wie ist die Anlage aufgebaut? Zwischen zwei ringförmigen Gleichspannungs-Elektromagneten dreht sich eine Scheibe mit einem spiralförmigen kapillaren Gewinde, über welche sich zentrifugal der Flüssigkeitsstrom bewegt.

   Die Flüssigkeit trifft über eine vertikale Bohrung in der Welle auf die Scheibe (siehe Bild-3).

   Bewegt sich die Flüssigkeit in dem transversalen Magnetfeld, werden gemäß der Lorentz-Kraft alle aufgeladenen Teilchen nach rechts in Richtung der elektrischen Hochspannungsanode gelenkt.

   Als Anode dient die kapillare Spirale der sich drehenden Scheibe, die Scheibe selbst und die gesamte Konstruktion der Anlage. Die Elektronen werden durch die Felder an die Anode gepresst, durch den Hochspannungsgleichrichter "abgesaugt" und an die Katode übertragen.

   Als Katode dient die "Erde" bzw. ein Verbraucher. Aufgrund der Isolierung der Anlage kehren sie nicht in den Kreis zurück. Es erfolgt keine Rekombination, wie im Falle einer Elektrolyse. Dadurch erklärt sich auch die niedrigen Energiebedarf!

   Das überschüssige Elektronenpotential, welches sich in der Anlage ansammelt, wird im Laufe der Abscheidung/ Separierung allmählich an die "Erde" bzw. an Verbraucher abgegeben.

   Im Strom erfolgt eine lawinenartige Bildung von Sauerstoff- und Wasserstoffionen. Die Gaskomponente des Stromes wächst ständig an, erreicht am Ende der spiralförmigen Rille der Scheibe ihr Maximum und geht in Treibstoff über!

   Jetzt muss man die Anlage lediglich mit einem dichten Gehäuse umkleiden und daraus Gas entnehmen.

2. ***Formel der Erfindung***

   Die Flüssigkeit läuft über zwei senkrecht zueinander stehende Felder - ein Hochspannungsfeld und ein Magnetfeld.

   <u>Die elektronische Formel des Wassers</u>

$$H_2O = {}_8O(1S^2 2S^2 2P^4) + {}_1H(1S^1) + {}_1H(1S^1)$$

$$1S^2 \qquad 2S^2 \qquad 2P$$

An der Wasserstoffbahn 1S erfolgt ein kovalenter Austausch von unpaarigen Sauerstoffelektronen und Wasserstoffelektronen.

Die zwei Gase $H_2$ und $O_2$, die durch Elektronen auf den kovalenten Bahnen (2P) des Sauerstoffs und Wasserstoffs elektrisch verbunden sind (Bild-1) bilden gemeinsam Wasser. Damit Sauerstoff und Wasserstoff wieder gasförmig werden können, ist es erforderlich, die Elektronen der Wasserstoffbindung von der Bahn 2P zu entfernen.

Die Elektronenformel des Wassers lautet:

$$H_2O = {}_8O(1S^2 2S^2 2P^4) + {}_1H(1S^1) + {}_1H(1S^1)$$

Neben dem Protonen-Neutronen-Kern hat Sauerstoff drei elektronische Bahnen: 2 Elektronen auf der Bahn 2S, 2 Elektronen auf der Bahn 1S und 4 Elektronen auf der Bahn 2P (zwei entgegengesetzt und zwei unpaarig, die praktisch in allen chemischen Bindungen beteiligt sind. (siehe Abb).

Im Wassermolekül wechseln die unpaarigen Elektronen der Bahn 2P die Bahnen mit den Elektronen der Wasserstoffatome, die sich auf der Bahn 2P in einem Winkel von 105˚ befinden. Die Kraft der elektrostatischen Anziehung des Elektrons beträgt $8{,}2 \cdot 10^{-8}$ N. Die lineare Geschwindigkeit beträgt 2,2 km/s. Um die Wasserstoffbindung zu lösen, benötigt man Energie.

Die Ionisierungsenergie des Wassermoleküls beträgt $14{,}58 \cdot 10^{-20}$ J. Wenn das Elektronen-Volt $1{,}6 \cdot 10^{-19}$ J beträgt, so benötigt man für die Ionisierun

$$\frac{14{,}58 \cdot 10^{-20} \, J}{1{,}6 \cdot 10^{-19} \, J}$$

Das ergibt 0,98 eu.

Wenn bei der Elektrolyse die Entfernung zwischen der Katode und der Anode 3 - 4 mm beträgt (bei einem Radius des Wassermoleküls von $5{,}3 \cdot 10^{-14}$), so erhält man eine "Lokomotive" von astronomischer Länge aus Wassermolekülen und man benötigt Ionisierungsenergie, um die Wasserstoffbindungen zu lösen.

Das von der Bahn gerissene Elektron "springt" sofort auf die benachbarte Bahn, wo wiederum Energie benötigt wird, um das Elektron weiter zu bewegen etc. Zudem haben die Elektronen auf dem Weg von der Anode über die Stromquelle zur Katode zusätzliche Energie verbraucht, um die Katode verlassen zu können. Die Leistung eines solchen Austritts beträgt **69,76** $\cdot$ **10**$^{-20}$ J.

Berechnet man genau den Energieverbrauch für die Übertragung der Elektronen von einer Bahn auf eine andere, so erhalten wir die Faraday-Konstante für die Elektrolyse. Das ist ein enormer Energieverbrauch.

In unserer Variante vermeiden wir die Schemata der Wasserabscheidung, die mit diesen hohen Verlusten verbunden sind!

Stellen wir uns einen Flüssigkeitsstrom (Elektronenstrom) auf der Fläche einer Anode vor.

Davor steht eine "Wand" eines Magnetfeldes. Das Feld verbraucht keine Energie und verändert nicht die Module der Teilchen, sondern nur deren Bahn, da es die Elektronen zur Anode verdrängt Die Elektronen werden somit auf ihrem Weg über die Anode durch das Feld immer mehr "gedrängt", an die Anode "gerieben" und wechseln gleichmäßig auf "freie" Bahnen der Atome der Anode.

Die Energie wird in diesem Fall nur auf die Erzeugung des Feldes und das Durchpumpen der Flüssigkeit verwendet.

Die Elektronen durchlaufen den Weg von der Anode über den inneren Widerstand der Stromquelle bis zur isolierten Katode und kehren nicht in den Strom zurück, da die Katode isoliert ist. Somit gibt es keine Rekombination, die weit mehr Energie benötigen würde.

Das ständig anwachsende Potential der Elektronen wird über die Stromabnehmer zur Nutzung verfügbar.

**Berechnung der Produktivität**

In einem Wassermol befinden sich $6{,}02 \cdot 10^{-23}$ $H_2O$ Moleküle. Ihr Gewicht beträgt O+H+H = 16+1+1=18g.

I m$^3$ Gas enthält 1000:22,4=44,64 mol

44,64 mol H2O enthalten: $6{,}02 \cdot 10^{23} \cdot 44{,}64 = 268{,}7 \cdot 10^{23} = 2{,}69 \cdot 125^{23}$ Wassermoleküle.

Die Masse eines Wassermoleküls beträgt $3 * 10^{-26}$ kg, somit ist der Verbrauch <u>für 1 m³ Gas:</u>

$$3 * 10^{-26} * 2{,}69 * 10^{25} * = 2{,}69 * 0{,}3 = 0{,}807 \text{ kg} = \underline{807 \text{ g}}$$

Bei Abmessungen der Magnetspalte von 2,5*40 = 100 mm² und einer Geschwindigkeit des Flusses von 2 m/s werden durch die Magnetspalte 100 * 2000 = 200000 mm³/s oder 200 cm³/s oder 720000 cm³/Std passieren, d.h. 0,72 m³/Std.

Wenn für die Herstellung von 1 m³ Gas, 807 g Wasser benötigt werden, so werden bei einem Durchsatz von 0,72 m³/Std. Wasser

<u>7200 : 807 = 892 m³ Gas erzeugt.</u>

Bei einer Flussgeschwindigkeit von 1,5 m/s bedeutet dies

100 * 1500 = 150000 mm³/s bzw. 9000 cm³/min. Das ergibt 0,54 m³/Std.

Bei einem Durchsatz von dieser Menge Wasser werden 540000 : 807 = 669 m³ Gas erzeugt.

(Der Druck der Ringwasserleitung (4,0-6,0 bar) erzeugt leicht eine Flussgeschwindigkeit von 1,5 m/s)

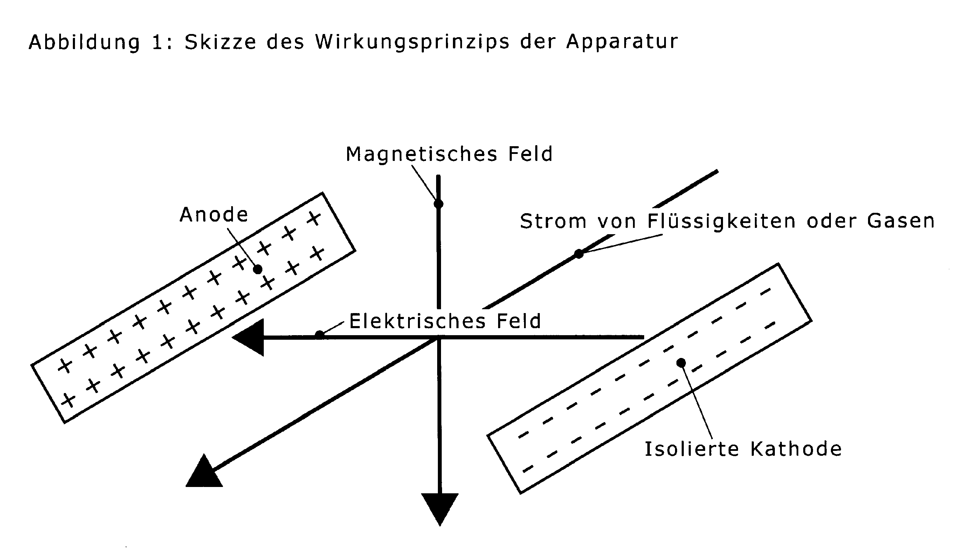

Abbildung 1: Skizze des Wirkungsprinzips der Apparatur

Abbildung 1: Skizze des Wirkungsprinzips der Apparatur

EP 2 163 514 A1

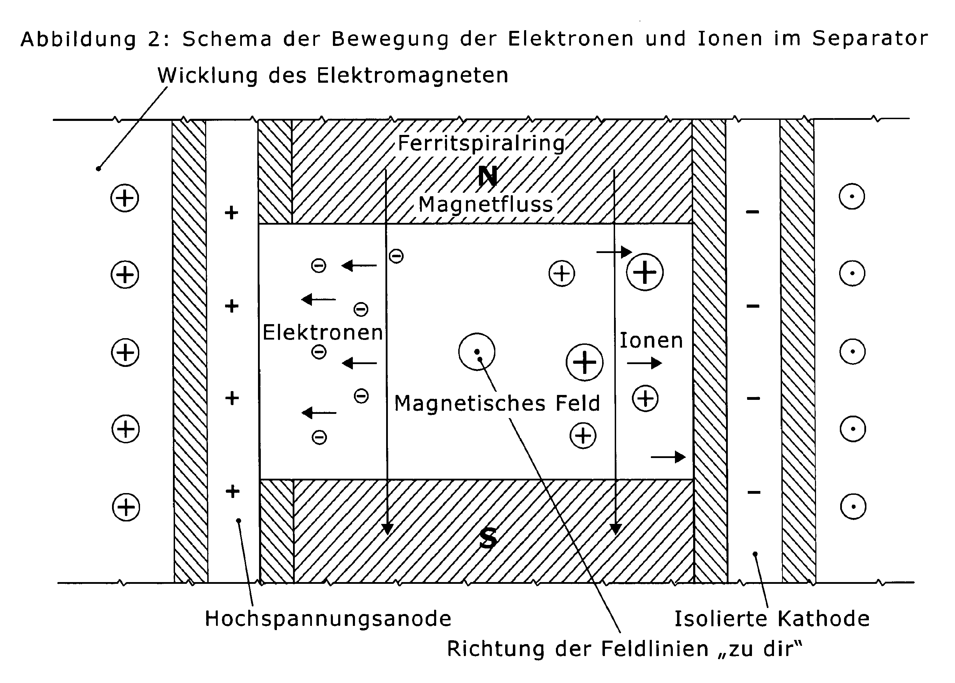

**Abbildung 2: Schema der Bewegung der Elektronen und Ionen im Separator**

Wicklung des Elektromagneten

Ferritspiralring

N

Magnetfluss

Elektronen

Ionen

Magnetisches Feld

Hochspannungsanode

Isolierte Kathode

Richtung der Feldlinien „zu dir"

EP 2 163 514 A1

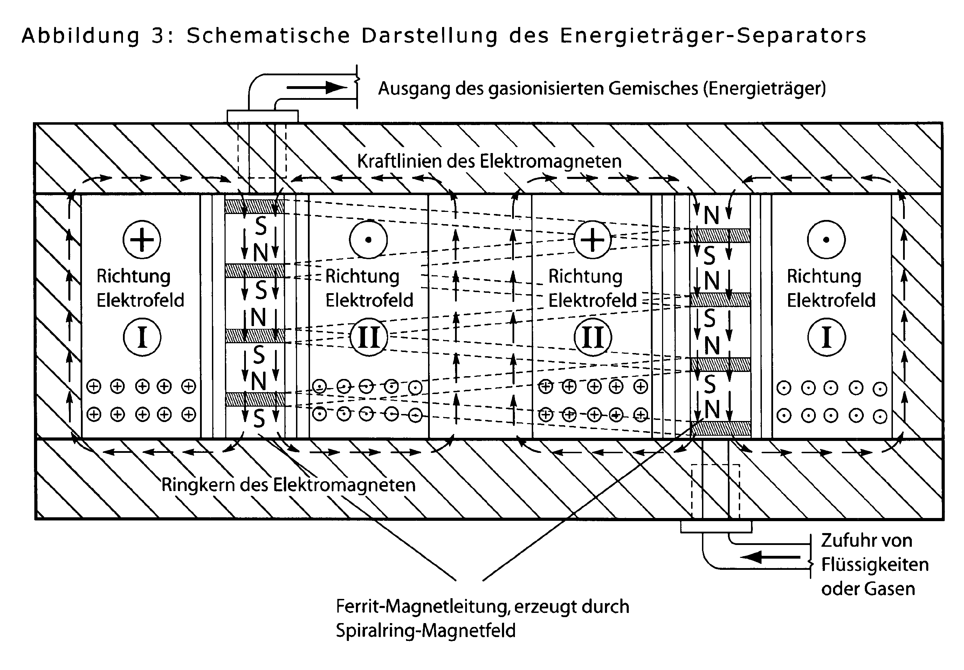

# Abbildung 3: Schematische Darstellung des Energieträger-Separators

Ausgang des gasionisierten Gemisches (Energieträger)

Kraftlinien des Elektromagneten

Richtung Elektrofeld $\oplus$ (I)

Richtung Elektrofeld $\odot$ (II)

Richtung Elektrofeld $\oplus$ (II)

Richtung Elektrofeld $\odot$ (I)

Ringkern des Elektromagneten

Ferrit-Magnetleitung, erzeugt durch Spiralring-Magnetfeld

Zufuhr von Flüssigkeiten oder Gasen

EP 2 163 514 A1

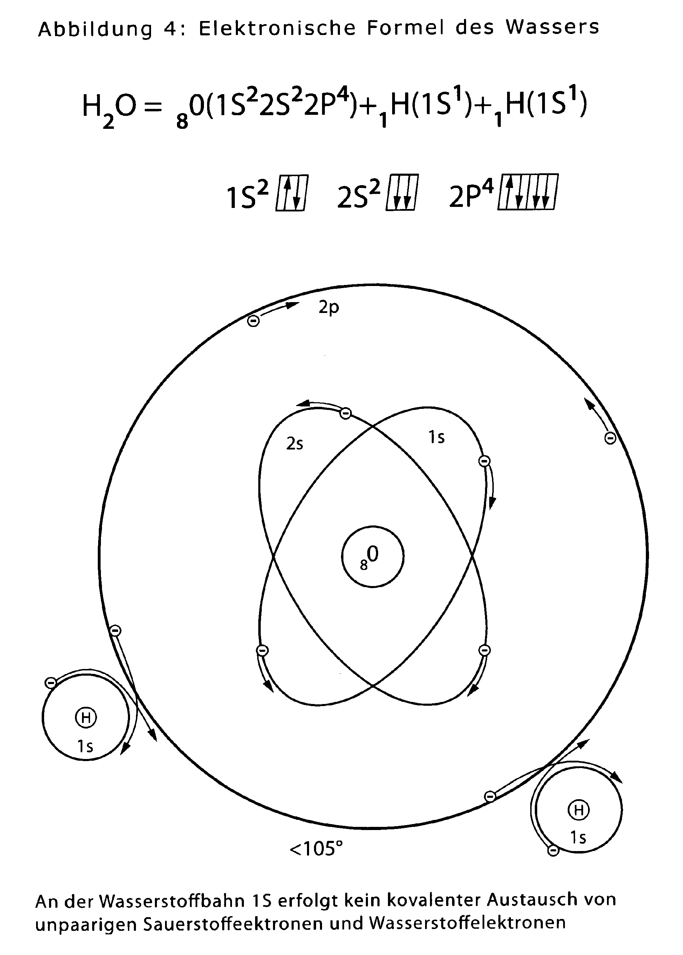

## Abbildung 4: Elektronische Formel des Wassers

$$H_2O = {}_8O(1S^2 2S^2 2P^4) + {}_1H(1S^1) + {}_1H(1S^1)$$

$$1S^2 \boxed{\uparrow\downarrow} \quad 2S^2 \boxed{\uparrow\downarrow} \quad 2P^4 \boxed{\uparrow\downarrow\downarrow\downarrow}$$

An der Wasserstoffbahn 1S erfolgt kein kovalenter Austausch von unpaarigen Sauerstoffeelektronen und Wasserstoffelektronen

**Europäisches Patentamt**
**European Patent Office**
**Office européen des brevets**

## EUROPÄISCHER TEILRECHERCHENBERICHT

der nach Regel 63 des Europäischen Patent-übereinkommens für das weitere Verfahren als europäischer Recherchenbericht gilt

**Nummer der Anmeldung**

EP 08 40 5222

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | US 4 747 925 A (HASEBE SHIGETA [JP] ET AL) 31. Mai 1988 (1988-05-31) * Spalte 3, Zeilen 39-50; Anspruch 1; Abbildung 1 * ----- | 1 | INV. C01B3/04 C25B1/04 |
| X | US 2007/163877 A1 (BROWN SANFORD [US] ET AL) 19. Juli 2007 (2007-07-19) * Absätze [0003], [0016], [0022], [0025], [0047] * ----- | 1 | |
| A | US 2004/203166 A1 (SULLIVAN JOHN TIMOTHY [US]) 14. Oktober 2004 (2004-10-14) * Absätze [0003], [0005]; Anspruch 1; Abbildung 6 * ----- | 1 | |
| E | DE 10 2007 026008 A1 (CONPOWER ENERGIEANLAGEN GMBH & [DE]) 11. Dezember 2008 (2008-12-11) * Absätze [0010] - [0012]; Ansprüche 1,3 * ----- | 1 | |
| A | US 2007/183942 A1 (AUSTIN GARY N [US]) 9. August 2007 (2007-08-09) * Absatz [0033] * ----- | 1 | RECHERCHIERTE SACHGEBIETE (IPC) C01B C25B |

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| Den Haag | 9. April 2009 | Galleiske, Anke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04E09)

Europäisches
Patentamt

European
Patent Office

Office européen
des brevets

**UNVOLLSTÄNDIGE RECHERCHE**
**ERGÄNZUNGSBLATT C**

Nummer der Anmeldung

EP 08 40 5222

Unvollständig recherchierte Ansprüche:
        1

Nicht recherchierte Ansprüche:
        2

Grund für die Beschränkung der Recherche:

Die vorliegenden Ansprüche 1 und 2 beziehen sich auf ein Verfahren zur
Gewinnung von Wasserstoff und Sauerstoff durch Spaltung von Wasser und
Wasserdampf. Die Beschreibung gibt jedoch nur eine unzureichende
Unterstützung und Offenbarung im Sinne von Artikel 84 und 83 EPÜ für ein
solches Verfahren, das die oben genannte Eigenschaft und Wirkung hat. Die
Verletzung der einschlägigen Erfordernisse ist so schwerwiegend, dass
eine sinnvolle Recherche des ganzen beanspruchten Gegenstandes nicht
durchgeführt werden konnte (Regel 63  EPÜ und Richtlinien B-VIII, 3).

Die Recherche von Anspruch 1 wurde deshalb auf das deutlich offenbarte
Verfahren beschränkt, das die gewünschte Eigenschaft oder Wirkung hat,
siehe Beschreibung Absatz 3 und 4 sowie Abbildung 1, nämlich die
kontinuierliche Zuleitung von Wasser und Wasserdampf in ein elektrisches
Spannungsfeld und ein dazu transversales elektromagnetisches Feld und
Ableitung eines Wasserstoff und Sauerstoff enthaltenen Gases.
Der Gegenstand des Anspruchs 2 ist so unklar, dass eine sinnvolle
Recherche unmöglich ist.

**ANHANG ZUM EUROPÄISCHEN RECHERCHENBERICHT
ÜBER DIE EUROPÄISCHE PATENTANMELDUNG NR.**

EP 08 40 5222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 4747925 | A | 31-05-1988 | JP<br>JP<br>JP | 1453231 C<br>60262986 A<br>62060474 B | 10-08-1988<br>26-12-1985<br>16-12-1987 |
| US 2007163877 | A1 | 19-07-2007 | KEINE | | |
| US 2004203166 | A1 | 14-10-2004 | KEINE | | |
| DE 102007026008 | A1 | 11-12-2008 | WO | 2008148504 A2 | 11-12-2008 |
| US 2007183942 | A1 | 09-08-2007 | KEINE | | |

EPO FORM P0461

Für nähere Einzelheiten zu diesem Anhang : siehe Amtsblatt des Europäischen Patentamts, Nr.12/82